# EUROPEAN PATENT APPLICATION

(11) **EP 1 600 851 A2**
(43) Date of publication of application: **30.11.2005**
(21) Application number: 05253275.1
(22) Date of filing: 27.05.2005
(51) Int. Cl.: G06F 3/12

(54) **Method and system for application page description in print device colour space**

(30) Priority: 27.05.2004 US 854912
(71) Applicant: Monotype Imaging, Inc., Woburn, Massachusetts 01801 (US)
(72) Inventor: Merrill, Darren J., Broomfield Colorado 80020 (US)
(74) Representative: Gallafent, Richard John

(57) **Abstract**

A technique for combining graphical objects in a computer system works by removing the destination dependent ROP commands to permit rendering directly to the device color space and pixel depth. The solution is to recognize that the GDI command sequences that applications use to generate various special print effects, such as transparency and complex clipping. Once recognized, the original application intent can be determined, allowing the GDI command sequence to be replaced with one that generates an equivalent output, but without the destination dependency. This avoids problems that arise when using ROP combinations, especially when rendering on a print device. This is because the ROP combinations are defined based on the GDI command sets, which are in an RGB color space, with a pixel depth of 24 bits. Thus, information can be lost when combining a series of GDI commands because of the pixel depth limitations. The problem becomes even more severe when drawing to the device color space, since it is typically not in the RGB color space and is usually half-toned. Attempting to apply the ROPs in the device color space can often produce incorrect or at least suboptimal results.

## Description

### BACKGROUND OF THE INVENTION

Computer operating systems often specify command sets that function as interfaces between various program applications that run on the operating system and also rendering devices or output devices, such as computer monitors and printers. These interfaces specify the commands and standard ways for the applications to interpret those commands. Microsoft Windows® operating system has such a command interface. Specifically, the graphical device interface (GDI) is the standard for representing graphical objects and transmitting those graphical objects between applications and rendering devices. These GDI commands are used to describe the content of a page to be printed

When generating special print effects, such as transparency or complex clipping, an application running on the Windows® operating system typically generates a specific series of GDI calls. These GDI calls are intended to interact with one another to create the desired effect, while representing the original intent of the application. In many cases, the application will use bitwise raster operations (ROPs) with a destination dependency to perform the combination of these GDI calls. A destination-dependent ROP includes the destination pixel value in the calculation of the new pixel value.

For example, a typical combination to provide an oddly-shaped color fill that is defined by a color (COLOR) and an oddly-shaped-mask (MASK), using bitwise raster operations with a dependency on the destination pixel (DEST) is:
DEST= COLOR XOR DEST;
DEST=MASK AND DEST; and
DEST= COLOR XOR DEST.

These bitwise operations enable a color fill to be applied based on a combination of the color, the corresponding oddly shaped mask and the corresponding destination pixel.

### SUMMARY OF THE INVENTION

As a general rule, the optimum performance of the target rendering device, such as the monitor or the printer, is achieved when the image data are consistent with the device's pixel depth and color space. A device's pixel depth corresponds to the number of colors that the device can render. A device's color space corresponds to the specific palette of colored ink/toner or light that the rendering device uses to render the image. Typically, displays use an additive process by combining red, green, and blue (RGB) light from red, green, and blue phosphors of the display pixels. In contrast, printing devices typically use a subtractive process in which successive inks or toner are deposited on the print media Often, the colors cyan, magenta, yellow, and black are used (CMYK). However, in more modem devices, additional colors can be used including light and dark versions of cyan and magenta.

Problems arise, however, when using ROP combinations, especially when rendering on a print device. This is because the ROP combinations are defined based on the GDI command sets, which are in an RGB color space, with a pixel depth of 24 bits. Information can be lost when combining a series of GDI commands because of pixel depth limitations. The problem becomes even more severe when drawing to the device color space, since it is typically not the RGB color space and is usually half-toned. Attempting to apply the ROPs in the device color space can often produce incorrect or at least suboptimal results.

The present invention is directed to a technique for combining graphical objects in a computer system. It is described in the context of the Windows® operating system, using the GDI command sets. The invention works by removing the destination dependent ROP commands to permit rendering directly to the device color space and pixel depth.

The solution is to recognize the GDI command sequences that applications use to generate various special print effects, such as transparency or complex clipping. Once recognized, the original application intent can be determined, allowing the GDI command sequence to be replaced with a different one that generates equivalent output while avoiding the destination dependency.

In general, according to one aspect, the invention features a method for controlling a rendering device. The method comprises interpreting received sequences of rendering commands in a base color space, generated by applications. Then, the original intent of the applications is determined. Finally, a new sequence of rendering commands is generated in a color space of the target rendering device, that manifest the determined original intent.

In the typical implementation, the rendering device is a printer, using a color space, such as CMYK. Base color space is typically in red, green, and blue. The received sequences of rendering commands typically have destination dependency. The invention works by generating new sequences of rendering commands in which the new sequences have no destination dependency.

In general, according to another aspect, the invention features a computer software product for controlling a rendering device. The product comprises a computer readable medium, such as a disk, in which program instructions are stored. These instructions, when read by computer, causing the computer to perform a sequence of operations. First, a received sequence of rendering commands is interpreted. These rendering commands are typically in a base color space generated by applications. Then, the original intent of the applications is determined. A new sequence of rendering commands is generated in the color space of the rendering device, manifesting this determined original intent.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:

Fig. 1 is a block diagram showing a typical computer system and rendering devices;

Fig. 2 is a flow diagram showing a prior art process for applying print effects;

Fig. 3 is a block diagram showing a computer system and rendering devices using the inventive system; and

Fig. 4 is a flow diagram showing a process for applying print effects according to the present invention.

### DETAILED DESCRIPTION OF THE PREFERRED EMBODIMENTS

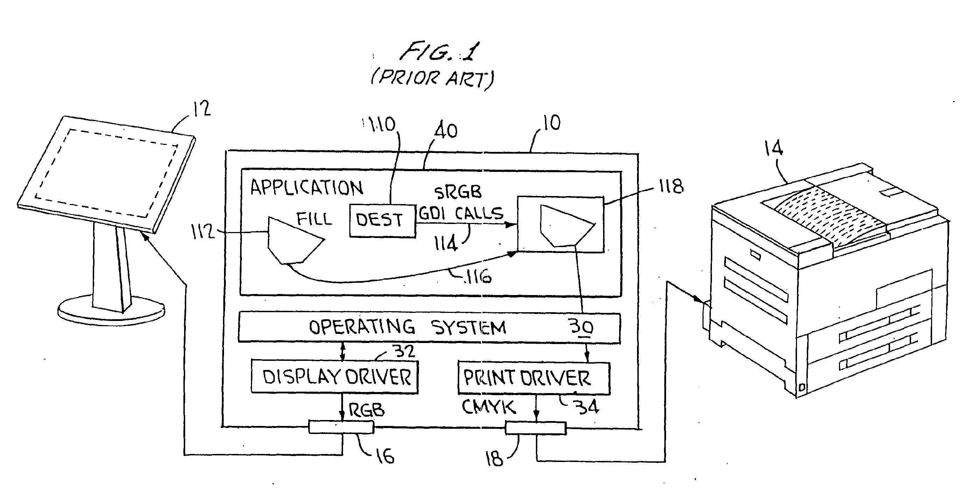

Fig. 1 shows a computer system 10 connected to a display rendering device 12 and printer rendering device 14, as is conventional.

In more detail, the computer 10 communicates to the display 12 and the printer 14, via a display interface 16 and a printer interface 18, respectively. Often, the printer interface 18 can simply be a physical (parallel) port on the computer. In other cases, however, the printer 14 may be networked, with the interface being defined in the network communications between the computer 10 and the printer 14.

The computer 10 runs a number of hierarchically organized software components. Specifically, an operating system 30 controls the overall operation of the computer 10. It communicates to the display interface 16 and the display 12, via a display driver 32. This display driver handles such hardware functions as running the computer's graphic card and generally functions to convert the data generated by the operating system into a form that can be interpreted by the display 12.

A print driver 34 also coordinates with the operating system 30 and the print device 14 to convert commands from the operating system 30 into the instructions required to drive the printer 14 through the printer interface 18. Often, the print driver converts data received in an RGB color space in the form of a continuous-tone (contone) image to the CMYK color space, as used in typical printers 14. Further, the contone image is converted by the print driver to a halftoned image.

Halftoning is required because most print devices cannot render an arbitrary color depth. Instead, they simply can deposit ink or toner or not at each addressable location (pixel) on the page. As a result, a halftone process is used in order to render arbitrary levels of color intensity.

An application 40 runs on the operating system 30. Typically, the applications that would be relevant to the invention are applications for manipulating graphical objects.

In the illustrated example, the application 40 is modifying a destination image 110, based upon a fill instruction 112 generated by a user, for example. Specifically, the application generates a series of GDI calls, corresponding to the destination image 114 and the fill instruction 116. These GDI commands are generated in the RGB color space. A common color depth is 24 bits. The application 40 will typically use bitwise ROPs with a destination dependency to perform the combination.

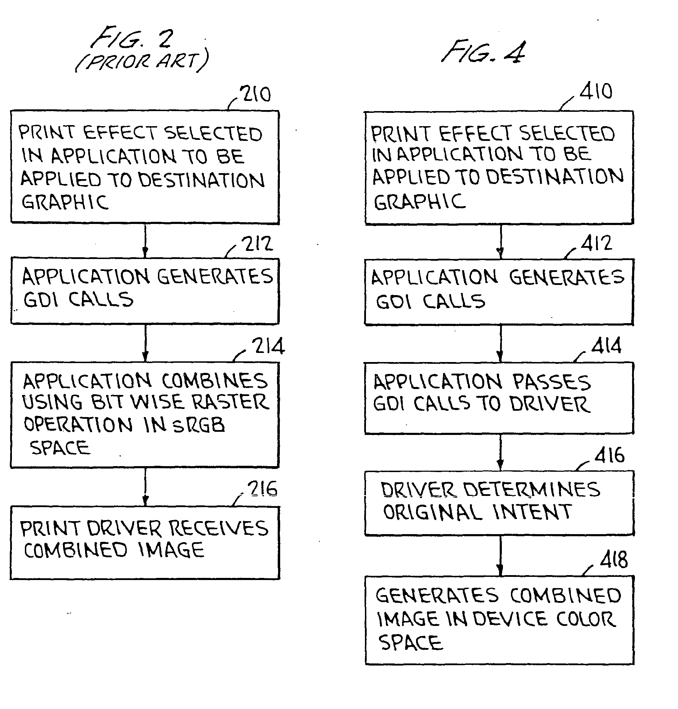

Fig. 2 is a flow diagram illustrating the overall process performed in the prior art. Specifically, in step 210, a print effect is selected in the application to be applied to the destination graphic. Then, the application generates the GDI calls in step 212.

In step 214, the application combines the GDI calls, using bitwise raster operations in the RGB space. Finally, the printer driver receives the combined image 118 in step 216 and converts it into the instructions required such that it can be rendered on the print device 14, for example.

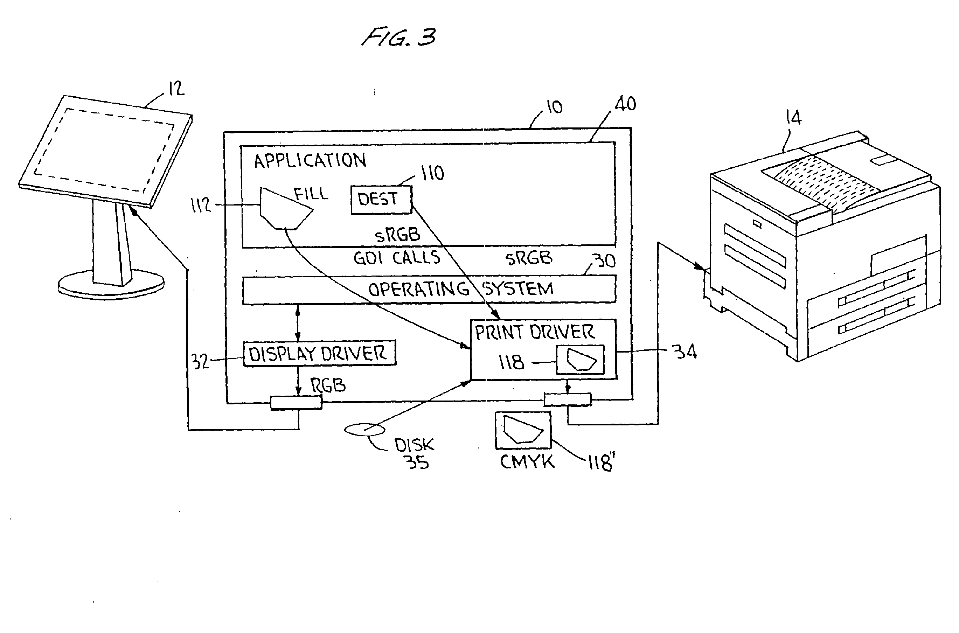

Fig. 3 shows the system which has been constructed according to the principles of the present invention.

As described previously, it typically operates in the context of a computer 10, which has the display 12 and associated rendering device 14, such as a printer. Application 40, directed toward graphic manipulations, runs on the operating system 30. Further, the operating system has a display driver 32 and a printer driver 34, typically loaded onto the computer 10 from a disk 35.

According to the present invention, the GDI calls generated by the application 40 are passed directly to the inventive print driver 34. Specifically, the GDI calls associated with the destination image 110 and the fill instruction 112 are passed directly to the print driver 34, rather than being combined in the application 40.

The inventive print driver 34 then analyzes the specific GDI calls to determine the original intent of the application 40. For example, if the application is applying a print effect, such as transparency, or a complex clipping operation, the print driver determines this original intent from the sequence of GDI calls. The print driver then determines a sequence that will generate an equivalent output, but without a destination dependency.

For example, in the previous example of applying an oddly shaped color fill, the equivalent command might be dest=oddly-shape-color fill.

Thus, the combination of the GDI calls is provided by the print driver to create the resulting combined image 118. This occurs, however, in the color space and pixel depth of the target print device 14. The print driver 34 then sends the combined image 118' to the print device 14 in the print device's color space and pixel depth, thus avoiding a loss of any information.

According to the present invention, by collecting the GDI command stream and processing it to replace problematic sequences, a page description language (PDL) can be optimized, preserving the original application intent, but without the use of destination-dependent ROPs.

Fig. 4 illustrates the inventive command sequence. Specifically, a print effect 112 is selected in the application to be applied to the destination graphic 110 in step 410. Then, the application generates the GDI calls required for the print effect application.

These GDI calls, however, are passed to the driver 34 in step 414. The driver 34 then determines the original intent in step 41b and generates the combined image 118 in the device color space, but without the destination dependency in step 418.

Here are a couple common examples of destination dependent sequence types and what they are turned into by the inventive system:

Case 1: XOR operations (subsequence 1) followed by masking (black) operations (subsequence 2), followed by the same XOR operations seen in subsequence 1 (subsequence 3).

The destination dependency can be removed by replacing the sequence (1, 2, 3) with a new sequence containing modified subsequence 1 (now using COPY instead of XOR), clipped to the shapes defined in subsequence 2.

Case 2: BitBlt (#1) operation using ROPx88 (DSa) immediately followed by a BitBlt (#2) operation, with the same destination, using ROPxEE (DSo).

The destination dependency here can be removed by replacing the two Blts with a single BitBlt operation, using the bitmap from BitBlt #1 as a mask and the bitmap from #2 as the source.

While this invention has been particularly shown and described with references to preferred embodiments thereof, it will be understood by those skilled in the art that various changes in form and details may be made therein without departing from the scope of the invention encompassed by the appended claims.

## Claims

1. A method for controlling a rendering device, the method comprising:
interpreting received sequences of rendering commands in a base colour space generated by applications;
determining an original intent of the applications;
generating a new sequence of rendering commands in a colour space of the rendering device manifesting the determined original intent.

2. A method according to Claim 1 wherein the rendering device is a printer.

3. A method according to Claim 1 or 2 wherein the received sequences of rendering commands have a destination dependency.

4. A method according any one of Claims 1 to 3 wherein the step of generating the new sequences of rendering commands comprises generating the new sequences of rendering commands with no destination dependency.

5. A method according to Claim 4 wherein the determined original intent comprises print effects.

6. A method according to Claim 4 wherein the determined original intent comprises a transparency print effect.

7. A method according to Claim 4 wherein the determined original intent comprises a clipping print effect.

8. A method according to Claim 4 wherein the determined original intent comprises a colour fill.

9. A computer software product for controlling a rendering device, the product comprising a computer-readable medium in which programme instructions are stored, which instructions, when read by a computer, cause the computer to:
interpret received sequences of rendering commands in a base colour space generated by applications and determine an original intent of the applications; and
then generate a new sequence of rendering commands in a colour space of the rendering device manifesting the determined original intent.

10. A computer software product according to Claim 9 wherein the rendering device is a printer.

11. A computer software product according to Claim 10 wherein the programme instructions are a printer driver.

12. A computer software product according to any one of Claims 9 to 11 wherein the computer-readable medium is a computer disk.

13. A computer software product according to any one of Claims 9 to 12 wherein the received sequences of rendering commands have a destination dependency.

14. A computer software product according to any one of Claims 9 to 13 wherein the received sequences of rendering commands have a destination dependency and the new sequence of rendering commands have no destination dependency.

15. A computer software product according to Claim 14 wherein the determined original intent comprises print effects.

16. A computer software product according to Claim 14 wherein the determined original intent comprises a transparency print effect.

17. A computer software product according to Claim 14 wherein the determined original intent comprises a clipping print effect.

18. A computer software product according to Claim 14 wherein the determined original intent comprises a colour fill.

19. A print driver for controlling a rendering device, the driver interpreting received sequences of rendering commands in a base colour space generated by applications; determining an original intent of the applications; generating a new sequence of rendering commands in a colour space of the rendering device manifesting the determined original intent.

20. A print driver according to Claim 19 wherein the received sequences of rendering commands have a destination dependency.

21. A print driver according to Claim 19 or 20 wherein generating the rendering commands comprises generating the new sequences of rendering commands with no destination dependency.
